(19) **Europäisches Patentamt / European Patent Office / Office européen des brevets**

(11) **EP 1 895 391 A1**

(12) # EUROPEAN PATENT APPLICATION

(43) Date of publication:
**05.03.2008 Bulletin 2008/10**

(51) Int Cl.:
*G06F 3/033* (2006.01)

(21) Application number: **06017050.3**

(22) Date of filing: **16.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SIEMENS AKTIENGESELLSCHAFT 80333 München (DE)**

(72) Inventors:
• **Kügle, Bernhard 86453 Dasing (DE)**
• **Sari, Andrea 85354 Freising (DE)**

(54) **Method and system for displaying a multitude of objects on a display**

(57) The present invention provides a method for displaying a multitude of objects on a display, said display offering an electronic pointer device. The method comprises of the following steps:
• determining a maximum number of said objects to be displayed in an adaptable orientation at a time
• automatically grouping said multitude of objects into at least one group containing at most said maximum number of said objects
• displaying said at least one group in a first list automatically displaying said objects grouped into said at least one group in a second list upon said electronic pointer device pointing to said at least one group.

Furthermore, a display used for the described method is described, as well as a computer system, a maintenance management system and a mobile phone using the described method and display.

FIG 3

EP 1 895 391 A1

**Description**

The present invention relates to a method and system for displaying a multitude of objects on a display.

In the telecommunication management world, many management systems exist for remote administration of equipment often distributed in a very large territory and in a very large amount of units. Such systems are called OMC (Operation and Maintenance Centre), and their complexity is growing continuously. An OMC provides an operator with a user interface displayed on a display, the user interface offering many graphical facilities to improve system usability. The OMC operator can act at the OMC display as he would act directly at the hardware equipment or interfacing virtual object representing the network management functions.

Considering the increasing of telecommunication network complexity, the number of supervised objects is increasing more and more. As the number of supervised objects increases, there is a necessity to supervise and display a large number of objects at the OMC display.

Although the supervised objects are structured using e.g. groups and levels, it happens that the operator is faced with lists of thousand of objects that cannot be displayed using a single display page due to technical limits.

Currently, such very long lists are displayed using vertical scroll bars, filtering lists to reduce list size, dividing lists into multiple sub-lists or pages, or using more than one monitor. The known methods have many disadvantages. In case of using of scroll bars, the operator can directly access only a part of the list. By using the scroll bar, the focus is moved to another part of the list. The dimension of the displayed part depends on the dimension of the displayed object and the maximal vertical dimension of the monitor used.

In case of using filters, the operator can focus on a specific part of the list, but it is always necessary to perform a new filtering, e.g. insert a new filter condition, in order to display other objects not included in the first list.

In case of using multiple sub-lists or pages, the operator can only access a part of the list. All other list items are present in another sub-list or on another page, and the operator has to turn the page or jump to another sub-list till the desired list item is displayed.

In case of using more than one monitor, the restriction of the monitor dimension is overcome. The display flat can be multiplied using many monitors one upon the other. The operator accesses all the list items moving the mouse pointer over the screen borders. The feasibility of such solution depends on the availability of specific software, together with the needed hardware, making such solution very expensive.

It is an aim of embodiments of the invention to address at the problems discussed above.

Said problem is solved by the features mentioned in the independent claims. Preferred embodiments of the invention are described in the dependant claims.

The present invention provides a method for displaying a multitude of objects on a display, said display offering an electronic pointer device. The method comprises of the following steps:

- determining a maximum number of said objects to be displayed in an adaptable orientation at a time
- automatically grouping said multitude of objects into at least one group containing at most said maximum number of said objects by selecting a portion of said multitude of objects
- displaying said at least one group in a first list
- automatically displaying said portion of said multitude of objects grouped into said at least one group in a second list upon said electronic pointer device pointing to said at least one group.

In another embodiment, said portion of said multitude of objects grouped into said at least one group are removed from said display upon said electronic pointer device being moved away from said at least one group.

In another embodiment, said at least one group is automatically assigned a group name based on names of said portion of said multitude of objects grouped into said at least one group.

In another embodiment, said first list and said second list are displayed in a vertical orientation.

Furthermore, the invention provides a display an electronic pointer device and with means for:

- displaying a maximum number of objects in an adaptable orientation at a time
- displaying at least one group of said objects in a first list
- automatically displaying said portion of said multitude of objects grouped into said at least one group in a second list upon said electronic pointer device pointing to said at least one group.

In another embodiment, said display further comprises of an adaptable physical resolution, said adaptable physical resolution limiting said maximum number of said objects to be displayed in an adaptable orientation at a time, and means for adapting said adaptable physical resolution, thereby increasing said maximum number of said objects to be displayed in an adaptable orientation at a time.

Furthermore, the invention provides a computer system, and a mobile phone, each with at least one display as described above, and with means for executing described the method.

Furthermore, the invention provides a maintenance management system with at least one display as displayed above, and with means for maintaining a communications system, and with means for executing the described method.

Furthermore, the invention provides a computer readable medium having computer-executable instructions adapted to cause a computer system as described above to perform the described method.

The proposed invention provides the advantage that even very long lists containing a multitude of entries can efficiently be displayed on a limited computer display.

Preferred embodiments of the present invention will now be described with reference to the accompanying drawings in which:

Figure 1: shows an automatic grouping process for a list with N entries

Figure 2: shows the content of a group

Figure 3: shows a screenshot of a prototypic implementation of the described method

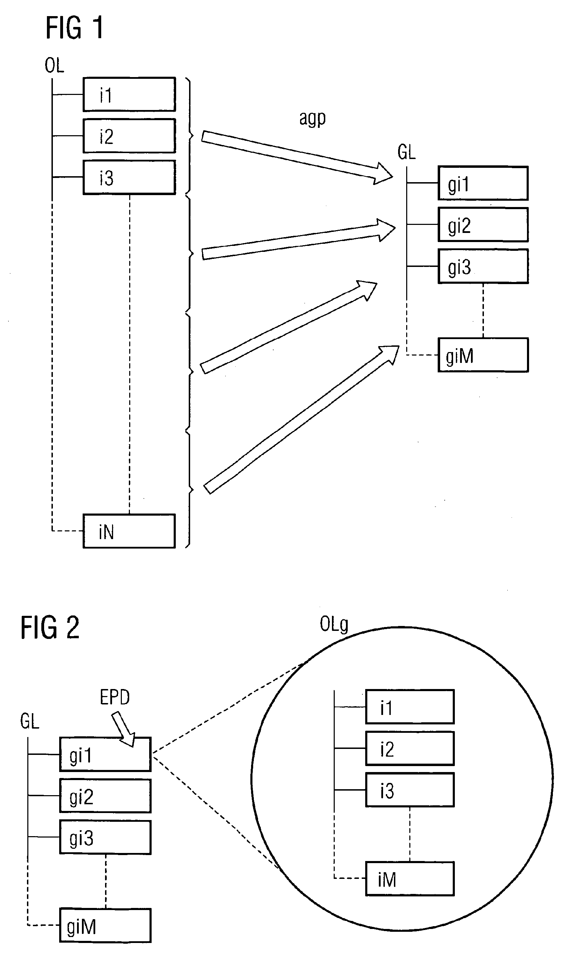

Figure 1 shows an automatic grouping process agp for a multitude of objects to be displayed on a display, e.g. a computer display. Said multitude of objects correspond e.g. to an original list OL with N entries $i1, i2, i3, ..., iN$. The display can display a maximum number M of said entries $i1, i2, i3, ..., iN$ in an adaptable orientation, e.g. in vertical orientation at a time. As the original list OL contains too many entries $i1, i2, i3, ..., iN$ to be displayed at a time, the automatic grouping process agp selects a first portion $i1, i2, i3, ..., iM$ of said entries, thereby defining a first group $gi1$. A second portion of entries selected defines a second group $gi2$, and so on. Finally, M subgroups are built from the original N list entries $i1, i2, i3, ..., iN$. The resulting groups $gi1, gi2, gi3, ..., giM$ are displayed as a first list GL on the display.

Figure 2 shows said first portion $i1, i2, i3, ..., iM$ of said entries grouped into said first group $gi1$ during the automatic grouping process shown in figure 1. The system executing the described method offers an electronic pointer device EPD, e.g. a computer mouse for controlling a mouse pointer. When the mouse pointer EPD is moved to a group displayed $gi1, gi2, gi3, ..., giM$ in the first list GL, automatically the content of this group is displayed, e.g. in a subgroup space, on the display. By this, the entries $i1, i2, i3, ..., iM$ of the original list OL are displayed and accessible. This effect of automatically displaying the content of a group $gi1, gi2, gi3, ..., giM$ in case of moving the mouse pointer EPD to said group $gi1, gi2, gi3, ..., giM$ may be seen as a loupe effect for very long lists, thereby allowing a fast and easy access to each single entry of the original list OL.

In the following, the method is described using an example.

In this example, said original list OL contains 2000 entries $i1, i2, i3, ..., iN$. These entries $i1, i2, i3, ..., iN$ represent e.g. cells of a mobile communications network. Each entry $i1, i2, i3, ..., iN$ requires 4 mm of vertical space when displayed on a display. Said display in this embodiment has a vertical screen dimension of 290 mm. Consequently, on said display a maximum M of 72 entries $i1, i2, i3, ..., iN$ can be displayed at a time. As there are 2000 entries $i1, i2, i3, ..., iN$ to be displayed, the method can automatic build 72 groups $gi1, gi2, gi3, ..., giM$, each of these groups $gi1, gi2, gi3, ..., giM$ consisting of 27 or 28 entries $i1, i2, i3, ..., iN$:

$$2000 : 72 = 27 \text{ Rest } 56$$

In this case, moving the mouse pointer EPD to one of the 72 groups $gi1, gi2, gi3, ..., giM$, displayed in the first list GL, the display shows said 27 or 28 entries $i1, i2, i3, ..., iM$ of the original list OL. The content of said group $gi1, gi2, gi3, ..., giM$ can for example be displayed in a pop up window, forming a group space on the display.

The maximal performance of the presented method can be considered as 72 groups, each containing 72 grouped entries $i1, i2, i3, ..., iM$ taken form the original list OL, thereby allowing 5184 list entries $i1, i2, i3, ..., iN$ to be displayed on said display without scrolling or turning to another display page.

The above described example can be considered as a gross calculation as normally the space available at a computer display is less than the maximal vertical screen dimension. Nevertheless, even with a smaller available vertical space the presented method for said automatic grouping process permits to display some thousands of objects at a time without scrolling or turning the page.

As it is necessary to assign a name to each displayed object on the computer display, and as only the original list OL entries $i1, i2, i3, ..., iN$ have a real name assigned, for the groups $gi1, gi2, gi3, ..., giM$ created "artificially" by the method new "artificial" names must be assigned. In the following is described how names can be assigned.

The normal case is to assign an unambiguous name to each object by using an integer value. The "artificial" name for a group $gi1, gi2, gi3, ..., giM$ is accordingly constructed with respect to the name range of the contained objects i1, i2, i3, ..., iM.

For example, considering cells with corresponding cell IDs, the original list items i1 i2, i3, ..., iN have the following names:

$$cellId = 1, cellId = 2, cellId = 5, ..., cellId = 5184$$

In case of the above example with groups gi1, gi2, gi3, ..., giM containing 72 objects, the groups gi1, gi2, gi3, ..., giM get the following "artificial" names:

cellGroupId = cells1to72,
cellGroupId = cells73to144, ...
cellGroupId = cells5112to5184

Naming groups in the above manner enables the operator to easily find an object based on the original list item name.

Alternatively, the automatic grouping process can follow an alphabetical principle. In fact, although in the example above the cellId is taken as reference, the described method works with all alphanumeric characters (digits and letters) as long as the operator recognizes the original name when looking at the subgroup name.

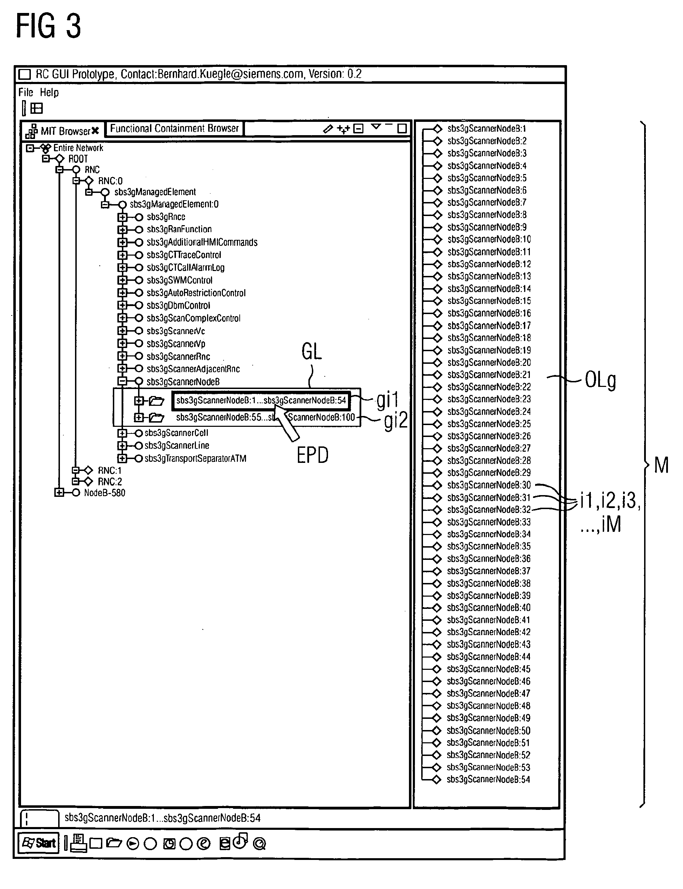

Figure 3 shows a screenshot of a prototypic implementation of the described method. The screenshot shows a windows containing said first list GL with groups gi1, gi2 defined by the above described method. The names for said groups gi1, gi2 are defined based on the names of the original list items i1, i2, i3, ..., iM shown in said second list OLg. Said original list items i1, i2, i3, ..., iM are named by a fixed string concatenated with an integer representing a unique id, in the example ids from the range from 1 to 100. Each defined group gi1, gi2 contains 54 entries i1, i2, i3, ..., iM, as this is the maximum number M of said entries i1, i2, i3, ..., iN to be displayed in a vertical manner at a time on the used computer display. Therefore, the first group gi1 is named "sbs3gScannerNodeB:1...sbs3gScannerNodeB:54", and the second group gi2 is named "sbs3gScannerNodeB:55...sbs3gScannerNodeB:100", thereby showing to an operator that the first group gi1 contains the original list entries i1, i2, i3, ..., iM with ids 1 to 54, while the second group gi2 contains the original list entries i1 i2, i3, ..., iM with ids 55 to 100. In the example, the mouse pointer EPD is moved to the first group gi1, therefore automatically the content of the first group gi1, i.e. said original list entries i1, i2, i3, ..., iM with ids 1 to 54 is displayed in said second list OLg using a group space on the display, i.e. a certain part of said window or a new window.

In another embodiment, the described method is executed recursively. I.e., after a first execution, the automatic grouping is executed at least a second time in at least a second execution, with the automatically defined groups gi1, gi2, gi3, ..., giM resulting from said first execution being automatically grouped into subgroups in said at least second execution. The recursive application of the described method terminates when the number of defined subgroups during a recursive execution no longer exceeds said maximum number M of said objects i1, i2, i3, ..., iN, gi1, gi2, gi3, ..., giM to be displayed.

The described method for displaying very long lists on a computer display has many advantages.

In the case of system monitoring, e.g. monitoring mobile communications systems, in order to perform a systematic surveillance of the managed objects represented by the list items, it is necessary to have all the objects on the screen at a time. As soon as an object gets a remarkable status for the operator, the graphical representation changes in an opportune way (e.g. blinking, changing the dimension or colour and so on). The described methods ensure that the general view of all the managed objects is not lost.

The described method is furthermore advantageous with respect to operator reaction time. Due to an abnormal system situation (e.g. alarm by a managed object) it is very important from the operator's point of view to be provided with a quick and easy access to the affected object to react in a proper way, e.g. lock the object or perform a diagnostic test. Having all the objects on the screen at a time, it is not necessary to search for the affected object by browsing through many pages or scrolling the list up and down. The described method allows to immediately locating the affected object on the screen without any mouse click.

The described method improves system usability in a significant way, reducing the reaction time at the operator level. As the described automatic grouping process takes place automatically in a way that the operator always gets all the objects grouped in the most suitable manner, the necessity of time-consuming extra actions like scrolling or turning a page are effectively avoided.

To summarize, by applying the described automatic grouping process of objects and a sort of zoom it is possible to go through a very long list of objects without using e.g. scroll bars, thereby maintaining all the supervised objects in the same display page at a time.

**Claims**

1. A method for displaying a multitude of objects (i1, i2, i3, ..., iN) on a display, said display offering an electronic pointer device (EPD),

   **the method comprising the steps of:**

   - determining a maximum number (M) of said objects (i1 i2, i3..., iN) to be displayed in an adaptable orientation at a time
   - automatically grouping said multitude of objects (i1, i2, ..., iN) into at least one group (gi1, gi2, gi3, ..., giM) containing at most said maximum number (M) of said objects (i1, i2, i3, ..., iN) by selecting a portion of said multitude of objects (i1, i2, i3, ..., iM)
   - displaying said at least one group (gi1, gi2, gi3, ..., giM) in a first list (GL)
   - automatically displaying said portion of said multitude of objects (i1 i2, i3, ..., iM) grouped into said at least one group (gi1, gi2, gi3, ..., giM) in a second list (OLg) upon said electronic pointer device (EPD) pointing to said at least one group (gi1, gi2, gi3, ..., giM).

2. The method in claim 1, wherein said portion of said multitude of objects (i1, i2, i3, ..., iM) grouped into said at least one group (gi1) are removed from said display upon said electronic pointer device (EPD) being moved away from said at least one group (gi1).

3. The method as claimed in any of the preceding claims, wherein said at least one group (gi1, gi2, gi3, ..., giM) is automatically assigned a group name based on names of said portion of said multitude of objects (i1, i2, i3, ..., iM) grouped into said at least one group (gi1, gi2, gi3, ..., giM).

4. The method as claimed in any of the preceding claims, wherein said first list (OL) and said second list (OLg) are displayed in a vertical orientation.

5. Display with an electronic pointer device (EPD) and with means for

   - displaying a multitude of objects (i1, i2, i3, ..., iN)
   - displaying a maximum number (M) of said objects (i1, i2, i3, ..., iN) in an adaptable orientation at a time
   - displaying at least one group of said objects (gi1, gi2, gi3, ..., giM) in a first list (GL)
   - automatically displaying a portion of said objects (i1, i2, i3, ..., iM) grouped into said at least one group (gi1, gi2, gi3, ..., giM) in a second list (OLg) upon said electronic pointer device pointing (EPD) to said at least one group (gi1, gi2, gi3, ..., giM).

6. The display according to claim 5, further comprising:

   - an adaptable physical resolution, said adaptable physical resolution limiting said maximum number (M) of said objects (i1, i2, i3, ..., iN) to be displayed in an adaptable orientation at a time
   - means for adapting said adaptable physical resolution, thereby increasing said maximum number (M) of said objects (i1, i2, i3, ..., iN) to be displayed in an adaptable orientation at a time.

7. A computer system with at least one display as claimed in claim 5 or 6, and with means for executing the method of one of claims 1 to 4.

8. A maintenance management system with at least one display according to claim 5 or 6, and with means for

   - maintaining a communications system, and
   - executing the method of one of claims 1 to 4.

9. A mobile phone with at least one display as in claim 5 and with means for executing the method of one of claims 1 to 4.

10. A computer readable medium having computer-executable instructions adapted to cause a computer system according to claim 7 to perform the method of one of claims 1 to 4.

# FIG 1

OL

| i1 |
| i2 |
| i3 |

agp

GL

| gi1 |
| gi2 |
| gi3 |

| giM |

| iN |

# FIG 2

GL

EPD

| gi1 |
| gi2 |
| gi3 |

| giM |

OLg

| i1 |
| i2 |
| i3 |

| iM |

# FIG 3

## EUROPEAN SEARCH REPORT

**European Patent Office**

| Application Number |
| --- |
| EP 06 01 7050 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| Y | WO 01/79982 A2 (EMC CORP [US]) 25 October 2001 (2001-10-25) * page 28, line 21 - page 30, line 20 * ----- | 1-10 | INV. G06F3/033 |
| Y | GB 2 324 450 A (IBM [US]) 21 October 1998 (1998-10-21) * page 2, line 32 - page 3, line 20; figures 4-6 * * page 5, line 5 - page 6, line 35 * ----- | 1-10 | |

| TECHNICAL FIELDS SEARCHED (IPC) |
| --- |
| G06F |

The present search report has been drawn up for all claims

| Place of search | Date of completion of the search | Examiner |
| --- | --- | --- |
| The Hague | 26 January 2007 | Arranz, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 01 7050

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2007

| Patent document cited in search report | | Publication date | Patent family member(s) | | Publication date |
|---|---|---|---|---|---|
| WO 0179982 | A2 | 25-10-2001 | DE | 10196067 T0 | 17-04-2003 |
| | | | GB | 2377354 A | 08-01-2003 |
| | | | JP | 2004511829 T | 15-04-2004 |
| | | | US | 6636250 B1 | 21-10-2003 |
| GB 2324450 | A | 21-10-1998 | US | 6163317 A | 19-12-2000 |

For more details about this annex : see Official Journal of the European Patent Office, No. 12/82